# EUROPEAN PATENT APPLICATION

(11) **EP 3 789 924 A1**
(43) Date of publication of application: **10.03.2021**
(21) Application number: 19196111.9
(22) Date of filing: 09.09.2019
(51) Int. Cl.: G06N 3/04, G06N 3/08

(54) **STOCHASTIC DATA AUGMENTATION FOR MACHINE LEARNING**

(71) Applicant: Robert Bosch GmbH, 70442 Stuttgart (DE)
(72) Inventor: Hoogeboom, Emiel, 1098 XA Amsterdam (NL); Zhang, Dan, 71229 Leonberg (DE)

(57) **Abstract**

A training method is described in which data augmentation is used, in that new data instances are derived from existing data instances (*x*) by modifying the latter in a manner dependent on, e.g., controlled or steered by, respective variables (*s*). A conditionally invertible function (*f*) is provided to generate different prediction target labels (*y**) for the new data instances based on the respective variables (*s*). The machine learnable model thereby may not only learn the class label of a data instance but also the characteristic of the modification. By being trained to learn the characteristics of such modifications, the machine learnable model may better learn the semantic features of a data instance, and thereby may learn to more accurately classify data instances. At inference time, an inverse of the conditionally invertible function (*f*⁻¹) may be used to determine the class label for a test data instance based on the output label (*z*) of the machine learned model.

## Description

### FIELD OF THE INVENTION

The invention relates to a computer-implemented method and system for training a machine learnable model using data augmentation of training data. The invention further relates to a computer-implemented method and system for using a machine learned model to classify data instances by assigning class labels. The invention further relates to a computer-readable medium comprising a machine learned model configured to classify data instances by assigning class labels. The invention further relates to a computer-readable medium comprising data representing instructions arranged to cause a processor system to perform at least one of the computer-implemented methods.

### BACKGROUND OF THE INVENTION

Machine learned ('trained') models are widely used in many real-life applications, such as autonomous driving, robotics, manufacturing, building control, etc. For example, machine learnable models may be trained to infer a state of a physical system, such as an autonomous vehicle or a robot, etc., or the system's environment, e.g., the road on which the vehicle is travelling, the robot's workspace, etc., based on sensor data which is acquired by one or more sensors. Having inferred the state, the physical system may be controlled, e.g., using one or more actuators, or its operation may be monitored.

However, it may be challenging to train a machine learnable model. For example, for deep neural networks, which are in many cases the most successful models for a given task, a known problem is the 'overfitting' of the model to the training data.

It is known to use data augmentation to address this problem. Such data augmentation may involve augmenting the training data of the machine learnable model by generating new data instances from existing data instances comprised in in the training data. For example, if the data instances are images, new images may be generated by resizing, cropping, rotating, adding noise to, distorting, etc., these images. Here, the term 'new' may refer to such an image being, in this form, not part of the original training data.

Nevertheless, it remains a challenge for machine learnable models to learn to accurately classify data instances even if data augmentation is used during the training.

### SUMMARY OF THE INVENTION

It is desirable to further improve a training of a machine learnable model data which uses data augmentation to augment the training data of the machine learnable model.

In accordance with a first aspect of the invention, a computer-implemented method and system are provided for training a machine learnable model using data augmentation of training data, as defined by claim 1 and 14, respectively. In accordance with a further aspect of the invention, a computer-implemented method and system are provided for using a machine learned model to classify data instances by assigning class labels, as defined by claim 10 and 15, respectively. In accordance with a further aspect of the invention, as defined by claim 12, a computer-readable medium is provided comprising a computer program with instructions for causing a processor system to perform a computer-implemented method. In accordance with a further aspect of the invention, as defined by claim 13, a computer-readable medium is provided comprising a machine learned model.

The above measures involve accessing training data for the training of a machine learnable model. The training data may comprise data instances, such as images, audio fragments, text fragments, etc., and associated class labels. Accordingly, for each data instance, at least one class label may be provided. The class labels may represent classes from a set of classes, and may have any suitable computer-readable form. For example, the class labels may be numerical labels, but which may have a semantic meaning such as 'dog', 'cat', etc. in the example of the data instances being images of pets. The data instances may represent 'existing' data instances in that they may serve as input to the data augmentation technique, and may typically be 'original' data instances, e.g., acquired by a sensor such as an image sensor or microphone, but may in some cases also be synthetic data instances, e.g., generated by data synthesis, or a combination thereof.

The machine learnable model may be trained on such training data in a manner which is known per se, which may typically involve providing the class labels as prediction targets for the machine learnable model when a corresponding data instance is supplied as input to the machine learnable model. Such training is known per se, and may take any suitable form given the type of machine learnable model. The machine learnable model may be of any suitable type, such as a neural network, e.g., a deep neural network, and may comprise, if the data instance to be classified are images, one or more convolutional layers. In a specific example, a deep convolutional neural network may be trained for image segmentation by performing classification on a pixel-level and by clustering parts of the image belonging to the same object class. Other examples of machine learnable models include but are not limited to linear classifiers (e.g. logical regression, naive Bayes classifiers), nearest neighbor classifiers, support vector machines, decision trees, boosted trees, random forest, etc. After the training, the machine learnable model may be considered a machine learned model, and may be used to classify non-training data instances, which may also be referred to as 'test' data instances. Namely, the machine learned model may provide an output label representing a prediction of a class of a test data instance when the test data instance is supplied as input to the machine learned model. This use is typically referred to as 'inference', and may be used in various applications, for example to classify objects in image data acquired by a camera, to classify whether audio recorded by a microphone represents speech or music, etc.
it is known per se to apply data augmentation to training data and thereby to augment the training data. For example, in the case of images, such data augmentation may comprise resizing, cropping, rotating, adding noise to and/or distorting images to obtain new images for the training of the machine learnable model. Such data augmentation may be considered a standard technique to prevent or reduce overfitting of the machine learnable model to the training data. Various of such data augmentation techniques exist, and may generally involve modifying an existing data instance to obtain a new data instance.

With continued reference to known data augmentation techniques, it is known that characteristics of such data augmentation techniques may be controlled, steered, or in any other way made dependent on external input. Such external input may for example be a control parameter or a seed for the data augmentation technique. It is known to vary the external input, e.g., from data instance to data instance so that the characteristic of the data augmentation varies, e.g., from data instance to data instance. For example, if the data augmentation involves rotating an input image, the rotation angle may be varied from image to image. For that purpose, the external input may be obtained as a variable from a pseudorandom or deterministic process which may be designed to effect a variation in the data augmentation. The characteristic of the data augmentation which may be controlled by such a variable may for example comprise a magnitude of the modification, e.g., a noise level, or a rotation angle, or any other suitable characteristic of the data augmentation.

In a specific example, if the data augmentation involves rotating an input image, the rotation may be varied from image to image. The variable controlling the rotation may take any suitable form, such as an integer *s* ∈ {0, 1, 2, 3} which may cause the data augmentation technique to affect the following rotations: *s* = 0: 0°/360° rotation, *s* = 1: 90° rotation, *s* = 2: 180° rotation and *s* = 3: 270° rotation. The variable may be obtained from a pseudorandom process, e.g., a suitably configured pseudorandom number generator, or from a deterministic process which may be designed to generate the variable in a varying manner, e.g., as a varying sequence of values, such as 0, 1, 2, 3, 0, 1, 2, 3, etc. The variable may therefore also be referred to as a 'stochastic' variable, and the data augmentation using such a stochastic variable as a stochastic data augmentation.

In known data augmentation, the input is modified while the label remains unchanged. In other words, while an existing data instance is modified to obtain a new data instance, the class labels of the existing data instance is maintained for the new data instance. For example, if an image labeled 'dog' is rotated by 90°, the rotated image will still be labeled 'dog' and therefore have a same prediction target label as the original, non-rotated image during the training of the machine learnable model. The prediction of the machine learnable model may thereby be made invariant to the data augmentation.

The measures described in this specification rather provide a data augmentation scheme which not only modifies the input to the machine learnable model, e.g., generates a new data instance by modifying an existing data instance, but also adapts the class label. Specifically, the class label is adapted according to a conditionally invertible function which takes as input the class label of the existing data instance and the variable '*s*' which controls, steers or in any other way determines the characteristic of the data augmentation. The resulting adapted class label is then used as prediction target when the new data instance is provided as input to the machine learnable model. Thereby, the prediction of the machine learnable model is made equivariant to data augmentation, in that the machine learnable model is made to learn not only the class label, e.g., 'dog', but also the characteristic of the data augmentation that is applied. Namely, separate classes may be generated by the conditionally invertible function for 'dog' and each of the characteristics of the applied data augmentation. In the earlier example of rotation, the conditionally invertible function *f* may map (also referred to as 'translate') the class label 'dog' and the variable *s* = 0 (no rotation) to a first class, the class label 'dog' and the variable *s* = 1 (90° rotation) to a second class, the class label 'dog' and the variable *s* = 2 (180° rotation) to a third class and the class label 'dog' and the variable *s* = 3 (270° rotation) to a fourth class, which classes may be used as prediction target labels for the corresponding newly generated images. Such mapping to separate classes may be provided by the function given the requirement of the function being invertible. In other words, the function may be a bijective function.

The above measures may have the effect that the machine learnable model learns not only the class label of a data instance, but also the characteristic of a data augmentation which is applied. In the earlier given example, the machine learnable model may learn that an image represents a 'dog' and in which way it is rotated. It has been shown, albeit within a different context which does not concern the purpose of data augmentation per se, namely in the publication 'Unsupervised representation learning by predicting image rotations', https://arxiv.org/pdf/1803.07728, that a machine learnable model may better learn semantic features of a data instance if the machine learnable model is also learned to predict the rotation degree. Learning such semantic features may be important to be able to correctly classify an image of a dog as a 'dog'. In other words, the machine learnable model may learn to better classify data instances if it is also able to predict the rotation degree.

While the above-mentioned publication concerns a different objective, namely unsupervised representation learning and specifically learning to predict a rotation of images, it has been found that the training of a machine learnable model, in which data augmentation is used, may generally improve if the machine learnable model is made to learn not only the class label but also the characteristic of the data augmentation. In particular, it has been found that training a machine learnable model to understand the characteristics of the data augmentation may positively guide and regularize its learning process. Effectively, the characteristic of the data augmentation may be considered as a training signal, which by the above measures may be translated into a unique label. The above measures may systematically incorporate this training signal, namely by providing suitably modified class labels for new data instances generated by data augmentation.

At inference time, when applying the machine learned model to a test data instance, an inverse of the invertible function may be used to map the output label of the machine learned model to one of the original set of classes. Thereby, images which may be predicted by the machine learned model to represent 'dogs' but at different rotation degrees, and therefore having different output labels, may be mapped by the inverse of the invertible function to a same original class label 'dog'. Thereby, the machine learned model may be used in a conventional way to predict a class label for a test data instance, in that the predicted type of data augmentation may be effectively ignored at inference time by inversely translating the separate output labels back to a single original class label. In other embodiments, the fact that the machine learned model may have learned to predict a characteristic of a data augmentation, e.g., a rotation degree, may be used in the application, for example in a manner which is dependent on the application domain.

Optionally, deriving the new data instance (*x**) from the data instance (*x*) comprises applying a data augmentation technique to the data instance (*x*) and controlling a data augmentation by the data augmentation technique using the variable (*s*). For example, the variable (*s*) may be a control parameter or a seed of the data augmentation technique.

Optionally, the data augmentation technique is provided by a preprocessing layer of or preceding the machine learnable model which receives as input the data instance *(x)* and the variable (*s*) and which provides as output the new data instance (*x**). Accordingly, the data augmentation technique may be implemented as a preprocessing layer which may be part of the machine learnable model but which also may be separate yet precede the machine learnable model, in that the machine learnable model may receive as input the output of the preprocessing layer. In some embodiments, the preprocessing layer may also generate the prediction target labels (*y**) for the new data instances (*x**).

Optionally, deriving the new data instance (*x**) from the data instance (*x*) comprises, during the training:
- using the data instance (*x*) as input to the machine learnable model;
- modifying an intermediate output of the machine learnable model as a function of the variable (*s*) to establish the new data instance (*x**) as a modified intermediate output of the machine learnable model; and
- continuing to train the machine learnable model using the modified intermediate output.

The above may represent an alternative to data augmentation, in that a data instance may not be modified directly but rather a representation of the data instance within the machine learnable model. Namely, when the data instance is used as input to the machine learnable model, the data instance may be represented by one intermediate output values, such as hidden unit outputs in case the machine learnable model is a neural network. Accordingly, instead of directly modifying the data instance, such intermediate output values may be modified based on the variable (*s*). Here, the term 'intermediate output' is to be understood as referring to an output of an intermediate part of the machine learnable model, for example an output of an input layer or a set of layers of the machine learnable model, and thereby not to an output of the overall machine learnable model.

Optionally, the machine learnable model is a neural network, and wherein the intermediate output comprises hidden unit outputs of the neural network.

Optionally, modifying the intermediate output comprises concatenating the hidden unit outputs with the variable (*s*). By concatenating the hidden unit outputs with the variable (*s*), the network may be widened by the data augmentation as concatenation.

Optionally, the method further comprises:
- obtaining a set of variables ({*s*₀, *s*₁, ...,*s_{N}*});
- deriving the new data instance (*x**) from the data instance (*x*) by iteratively modifying (*x** = *g_{N}*(...*g*₁(*g*₀(*x,s*₀),*s*₁)...,*s_{N}*)) the data instance (*x*) in a manner which is dependent on respective ones of the set of variables; and
- determining the prediction target label (*y**) using a set of conditionally invertible functions ({*f*₀,*f*₁, ...,*f_{N}*}) which are iteratively applied (*f_{N}*(...*f*₁(*f*₀(*y,s*₀),*s*₁) ...,*s_{N}*)) to the class label (*y*) and respective ones of the set of variables ({*s*₀,*s*₁, ...,*s_{N}*}).

For example, the new data instance may be derived by iteratively modifying the existing data instance using different data augmentation techniques *g*₀,*g*₁, ... *g_{N}* which each may be controlled, steered by in any other way determined by a respective variable *s*₀*,s*₁, ...*, s_{N}*. For example, the different data augmentation techniques may comprise rotation (*g*₀), mirroring (*g*₁), adding noise (*g*₂), etc., of which a characteristic may be determined by respective parameters, e.g., *s*₀ determining the rotation angle, *s*₁ determining horizontal or vertical mirroring, *s*₂ determining a gaussian noise level, etc. By applying several of such data augmentation techniques, the complexity of the overall data augmentation may be increased. The number of iterative modifications may correspond to the number of different data augmentation techniques and may be determined by a parameter *N* which may thereby determine the complexity of the data augmentation. The parameter *N* may be statically defined, but may in some embodiments also be dynamically modified during training time, for example by gradually and progressively increasing *N* during the training to gradually and progressively increase the complexity of the data augmentation during the training. This may allow splitting the training into several stages in which the types of data augmentations may be added one after another. Such gradual and progressive increasing of the complexity of the data augmentation has been found to be advantageous in preventing or reducing overfitting of the machine learnable model. It will be appreciated that instead of using different data augmentation techniques, also a same technique may be used but in which the different variables introduce different characteristics, e.g., *s*₀ determining a 180° rotation angle, *s*₁ determining a 90° rotation angle, *s*₂ determining a 45° rotation angle, etc.

Optionally, the conditionally invertible function (*f*) is a machine learnable function having the variable (*s*) as a condition, and wherein the method comprises learning the machine learnable function using the class label (*y*) and the variable (*s*) as input.

Optionally, at inference time, the method further comprises:
- drawing multiple variables (*s*₀, *s*₁, ..., *s*_{*L*-1}) from the pseudorandom or deterministic process;
- deriving multiple new data instances (*x*₀, *x*₁, ...,*x*_{*L*-1}) from the data instance (*x*) by modifying, in a manner which is dependent on the respective variables (*s*₀,*s*₁, ...,*s*_{*L*-1}), the data instance (*x*) to obtain the respective new data instances (*x*₀,*x*₁, ...,*x*_{*L*-1});
- classifying the multiple new data instances (*x*₀*,x*₁,...,*x*_{*L*-1}) using the machine learning model to obtain respective output labels (*z*₀*,z*₁, ...,*z*_{*L*-1});
- determining respective class labels (*y*₀,*y*₁,...*y*_{L-1}) from the set of classes ({0,1, ..., *C* - 1}) for the multiple new data instances (*x*₀, *x*₁, ...,*x*_{*L*-1}) using an inverse of the conditionally invertible function (*y* = *f*⁻¹(*z,s*)) having as input a respective output label (*z*₀,*z*₁...,*z*_{*L*-1}) and a respective variable (*s*₀,*s*₁, ...,*s*_{*L*-1}); and
- determining a classification uncertainty of a classification by the machine learned model based on a comparison of the respective class labels (*y*₀, *y*₁, ..., *y*_{*L*-1}).

The machine learned model and the conditionally invertible function may be used to determine a classification uncertainty of a classification by the machine learned model. Briefly speaking, the classification uncertainty of a machine learned model classifying a test data instance may be considered to be high if, for a same test data instance, differently augmented versions of the test data instance yield output labels which, when translated to an original class label, are not all translated to the same class. Accordingly, the above measures may effectively 'augment' a test data instance by generating one or more new data instances based on a same type of data augmentation scheme as is used during the training of the machine learned model. For that purpose, one or more variables are drawn from the pseudorandom or deterministic process. Each new data instance may then be classified by the machine learned model, and a class label may be determined based on the inverse of the invertible function and the corresponding variable. This may provide a so-called 'ensemble of classification results'. The class labels may then be compared to determine a classification uncertainty of the classification, for example in a manner is known per se. If all class labels are not the same, this may indicate that the machine learned model is unable to properly classify the test data instance, indicating an uncertainty of the prediction. This may therefore be used as an alternative to Monte Carlo dropout.

It will be appreciated by those skilled in the art that two or more of the above-mentioned embodiments, implementations, and/or optional aspects of the invention may be combined in any way deemed useful.

Modifications and variations of any system, any computer-implemented method or any computer-readable medium, which correspond to the described modifications and variations of another one of said entities, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a system for training a machine learnable model using data augmentation of training data, wherein the system is configured to derive new data instances from data instances which originate from the training data and to obtain a prediction target label for the new data instance using a conditionally invertible function which is applied to a class label of the data instance;
Fig. 2 shows a computer-implemented method for training a machine learnable model using data augmentation of training data;
Fig. 3 illustrates the data augmentation and the corresponding prediction target label generation being implemented by a preprocessing layer which precedes the machine learnable model and which iteratively generates the new data instance and the prediction target label based on a set of conditionally invertible functions;
Fig. 4 shows a system for using a machine learned model to classify data instances by assigning class labels;
Fig. 5 shows an autonomous vehicle comprising a control system which uses a machine learned model to classify sensor data for (semi-)autonomous driving;
Fig. 6 shows a computer-implemented method for using a machine learned model to classify data instances by assigning class labels; and
Fig. 7 shows a computer-readable medium comprising data.

It should be noted that the figures are purely diagrammatic and not drawn to scale. In the figures, elements which correspond to elements already described may have the same reference numerals.

### List of reference numbers

The following list of reference numbers is provided for facilitating the interpretation of the drawings and shall not be construed as limiting the claims.
- 20: sensor
- 22: camera
- 40: actuator
- 42: electric motor
- 60: environment
- 80: (semi)autonomous vehicle

- 100: system for training machine learnable model using data augmentation of training data
- 160: processor subsystem
- 180: data storage interface
- 190: data storage
- 192: training data
- 194: data representation of untrained machine learnable model
- 196: data representation of machine learned (trained) model

- 200: method for training machine learnable model using data augmentation of training data
- 210: accessing training data
- 220: training machine learnable model using training data
- 230: obtaining variable from pseudorandom or deterministic process
- 240: deriving new data instance from data instance
- 250: determining prediction target label
- 260: using new data instance in training
- 270: outputting data representation of machine learned model

- 300: machine learnable model
- 310: preprocessing layer

- 400: system for using machine learned model to classify data instances by assigning class labels
- 420: sensor data interface
- 422: sensor data
- 440: actuator interface
- 442: control data
- 460: processor subsystem
- 480: data storage interface
- 490: data storage

- 500: method for using machine learned model to classify data instances by assigning class labels
- 510: accessing model data representing the machine learned model
- 520: applying machine learned model to data instance to obtain output label
- 530: obtaining variable from pseudorandom or deterministic process
- 540: determining class label for data instance

- 600: computer-readable medium
- 610: non-transitory data

### DETAILED DESCRIPTION OF EMBODIMENTS

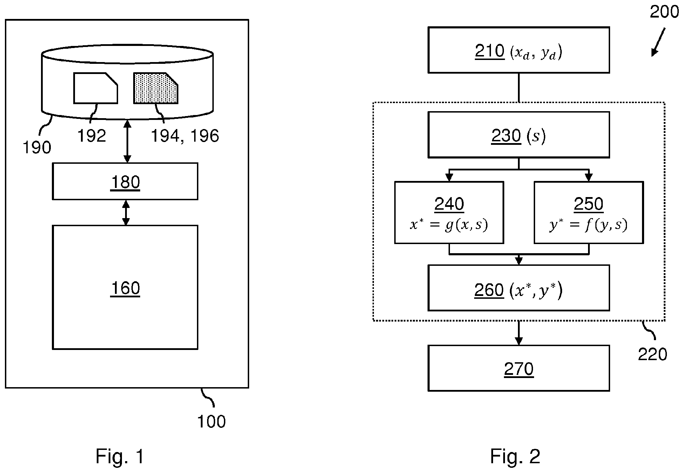

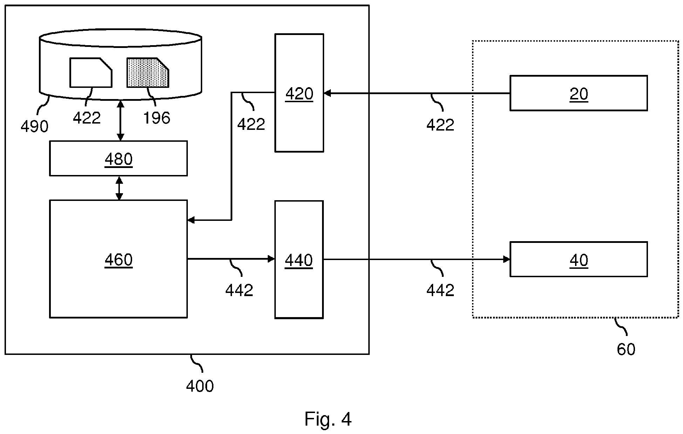

The following describes with reference to Figs. 1-3 the training of a machine learnable model using data augmentation of training data, and the data augmentation itself, and with reference to Figs. 4-6 the use of the machine learned model, which has been trained using the data augmentation, to classify data instances by assigning class labels.

**Fig. 1** shows a system 100 for training a machine learnable model using training data and using data augmentation of the training data. The system 100 may comprise an input interface for accessing training data 192 for the machine learnable model. For example, as illustrated in Fig. 1, the input interface may be constituted by a data storage interface 180 which may access the training data 192 from a data storage 190. For example, the data storage interface 180 may be a memory interface or a persistent storage interface, e.g., a hard disk or an SSD interface, but also a personal, local or wide area network interface such as a Bluetooth, Zigbee or Wi-Fi interface or an ethernet or fiberoptic interface. The data storage 190 may be an internal data storage of the system 100, such as a hard drive or SSD, but also an external data storage, e.g., a network-accessible data storage.

The training data 192 may be any suitable type of training data, but may in general comprise one or more data instances, such as images, audio fragments, text fragments, etc. In addition, the training data 192 may comprise at least one class label for each of the data instances. The class labels may represent classes from a set of classes, and may be used as prediction targets for the machine learnable model to learn which class a particular data instance represents. In a specific example, if the data instances are images which show pets, the class labels may identify which pet is shown in a respective image, for example by a numerical label which has a semantic meaning, e.g., '0' = dog, '1' = cat, etc. Another example is that if the data instances are audio fragments, the class labels may identify an auditive content of the audio fragments, e.g., 'A' = speech, 'B' = music, etc. In general, a class label may identify a contents of a respective data instance, but this is not a limitation in that it may also represent non-content related aspects of the data instance. In general, the class label may be represented in a computer-readable manner.

In some embodiments, the data storage 190 may further comprise a data representation 194 of an untrained version of the machine learnable model which may be accessed by the system 100 from the data storage 190. Such an untrained version may elsewhere also simply be referred to as machine 'learnable' model whereas a trained version may be referred to as a machine 'learned' model. It will be appreciated, however, that in general the training data 192 and the data representation 194 of the machine learnable model may also each be accessed from a different data storage, e.g., via a different subsystem of the data storage interface 180. Each subsystem may be of a type as is described above for the data storage interface 180. In other embodiments, the data representation 194 of the machine learnable model may be internally generated by the system 100 on the basis of a number of design parameters which define the machine learnable model, and therefore may not explicitly be stored on the data storage 190.

The system 100 may further comprise a processor subsystem 160 which may be configured to, during operation of the system 100, train the machine learnable model 194 using the training data 192. In particular, the processor subsystem 160 may be configured to, as part of or preceding the training, augment the training data 192. Such data augmentation may involve generating a new data instance using an existing data instance of the training data 192. This may involve the processor subsystem 160 obtaining a variable from a pseudorandom or deterministic process, deriving a new data instance from a data instance of the training data by modifying, in a manner which is dependent on the variable, the data instance to obtain the new data instance, and determining a prediction target label for the new data instance using a conditionally invertible function having as input a class label of the data instance and the variable. The new data instance and accompanying prediction target label may then be used by the processor subsystem 160 in the training of the machine learnable model. A plurality of such new data instances and prediction target labels may be generated in the above-describe manner, in which for each new data instance, a new variable may be drawn from the pseudorandom or deterministic process.

It is noted that the data augmentation will be further described elsewhere.

The system 100 may further comprise an output interface for outputting a data representation 196 of the machine learned model, this data also being referred to as trained model data 196. For example, as also illustrated in Fig. 1, the output interface may be constituted by the data storage interface 180, with the data storage interface 180 being in these embodiments an input/output ('IO') interface, via which the trained model data 196 may be stored in the data storage 190. For example, the data representation 194 defining the 'untrained' machine learnable model may during or after the training be replaced, at least in part, by the data representation 196 of the machine learned model, in that the parameters of the machine learnable model, such as weights, hyperparameters and other types of parameters of machine learnable models, may be adapted to reflect the training on the training data 192. This is also illustrated in Fig. 1 by the reference numerals 194, 196 referring to the same data record on the data storage 190. In other embodiments, the data representation 196 may be stored separately from the data representation 194 defining the 'untrained' machine learnable model. In some embodiments, the output interface may be separate from the data storage interface 180, e.g., a separate interface, but which separate interface may in general be of a type as described above for the data storage interface 180.

**Fig. 2** shows a computer-implemented method 200 for training a machine learnable model using data augmentation of training data. The method 200 may correspond to an operation of the system 100 of Fig. 1, but does not need to, in that it may also correspond to an operation of another type of system, apparatus or device or in that it may correspond to a computer program. The method 200 may comprise accessing 210 training data comprising data instances *x_{d}* and class labels *y_{d},* wherein the class labels *y_{d}* represent classes from a set of classes {0,1, ..., *C* - 1}. The method 200 may further comprise training 220 the machine learnable model using the training data. This training 220 may comprise augmenting the training data by obtaining 230 a variable s from a pseudorandom or deterministic process, deriving 240 a new data instance *x** = *g*(*x, s*) from a data instance *x* of the training data by modifying, in a manner which is dependent on the variable *s*, the data instance *x* to obtain the new data instance *x**, determining 250 a prediction target label *y** for the new data instance *x** using a conditionally invertible function *y** = *f*(*y*, *s)* having as input a class label *y* of the data instance *x* and the variable *s*, and using 260 the new data instance *x** and the prediction target label *y** in the training of the machine learnable model. It is noted that other steps of the training 220 which do not relate to the data augmentation per se are not shown in Fig. 2 but are known per se from the field of machine learning.

Fig. 2 further shows, as an optional aspect of the method 200, the method outputting 270 a data representation of the machine learned model, which machine learned model resulted from the training 220. For example, such a data representation may be output to a data storage or may be transmitted via a network interface to another entity.

The following describe the data augmentation in more detail using one or more examples. However, the actual implementation of the data augmentation may be carried out in various other ways, e.g., on the basis of analogous mathematical concepts.

A machine learnable model may be trained to model the probability distribution *P*(*x*,*y*) for data *x* and its class label *y*, representing a short-hand reference to data instances *x* and respective class labels *y*. Both may be provided in the form of training data (*x*,*y*). The training data may be augmented using a random variable *s* ∼ *P(s)* which may be independent of (*x*,*y*). The random variable *s* may be drawn from a pseudorandom or deterministic process. The drawn random variable *s* may elsewhere also be referred to as a 'realization of *s'.* The data augmentation may involve generating multiple new data instances which each may be based on a different realization of *s*. If *s* is drawn from a pseudorandom process, the data augmentation may yield pseudorandomized new data instances. If *s* is drawn from a deterministic process, the deterministic process may be designed to provide an alternation of different realizations of *s*, for example sequentially increasing in number, so as to deterministically vary the data augmentation process.

The data augmentation itself may be represented by a function *g*(*x, s*) representing a data augmentation technique, such as for example an image rotation by an angle which may be determined by *s.* In general, the data augmentation may represent a modification of *x* which is controlled using the variable *s*, and which may be a known type of modification or in general a known type of data augmentation. For example, if the data *x* comprises images, the variable *s* may determine a degree of rotation, an amount of noise, a type of distortion, etc. which may be applied by the data augmentation technique to the data *x.* It will be appreciated that, instead of being a control parameter, *s* may also act as a seed for a data augmentation process. In general, *s* may be considered as a source to modify *x*, or as an index for the data augmentation technique to select a degree of modification. The effect of *s* on *x* may depend on the type of data augmentation technique. If the function represented by the data augmentation technique is a linear function, this may be considered as that s may be transformed and added to *x.* If the function is a nonlinear function, then *s* and *x* may be convolved in more complicated way. It will be appreciated that the type of *s* may be dependent on the type of data augmentation technique, in that the data augmentation may be controlled by a parameter of a certain type (e.g., scalar, vector, array, etc.) and having a certain range, with *s* being generated to be of this type and range.

In a specific example, *s* may be drawn from {0, 1, 2, 3}, e.g., *s* ∈ {0, 1, 2, 3}, using a pseudorandom or deterministic value. Each value of s may represent a different degree of rotation to be applied to an image, e.g., *s* = 0 denoting no rotation, *s* = 1 denoting 90 degrees rotation, *s* = 2 denoting 180 degrees and *s* = 3 denoting 270 degrees rotation.

It will be appreciated that the data augmentation, e.g., the function *g*(*x, s*), may be a handcrafted function but may also a machine learnable function which may be learned, for example in the alternating manner, together with the machine learnable model.

The data augmentation may yield new data *x**, e.g., *x** = *g*(*x, s*)), as output. The corresponding label of *x** to be used as prediction target label in the training may be obtained by a conditionally invertible function *f* having as input a class label *y* of the data *x* and the variable *s*, namely as *y** = *f*(*y,s*). The function *f* may be a bijective mapping between *y* and *y** conditional on *s*, e.g., *y* = *f*⁻¹(*y*,s*). With *P*(*y**|*x,s*) = *P*(*y* = *f*⁻¹(*y**, *s*) |*x*), the machine learnable model may be trained to map (*x, s*) onto *y** = *f*(*y, s*) instead of directly modelling *P*(*y*|*x*). In other words, one may consider *x** as a translation applied on the input *x* and *f* to represent a corresponding translation on the output *y*. The machine learnable model may therefore be trained to be equivariant to this translation.

In some embodiments, the data augmentation technique may, instead of directly modifying *x*, modify a processed version of *x.* The processing may represent a feature decomposition, for example a decomposition into frequency components ('frequency features') by means of an FFT. In such an example, the data augmentation technique may be applied to the FFT version of *x.* In another example, the processing may be a processing by one or more layers of the machine learnable model. Namely, in such examples, the data instance *x* may be used as input to the machine learnable model. This may yield an intermediate output of the machine learnable model, which may then be modified as a function of the variable *s* to establish the new data instance *x** as a modified intermediate output of the machine learnable model. The machine learnable model may then be continued to be trained using the modified intermediate output. For example, if the machine learnable model is a neural network, the intermediate output may comprise one or more hidden unit outputs of the neural network which may be modified, for example by concatenating the hidden unit outputs with the variable s and then reinserting the modified intermediate output into the machine learnable model and continuing the forward pass.

The following may assume the data augmentation to be implemented by a preprocessing layer of the machine learnable model which receives the data instance *x* and the variable *s* as input and provides the new data instance *x** and a corresponding prediction label *y** as output, which may then be passed on to subsequent layers of the machine learnable model, e.g., to classification layers. However, this is not a limitation, in that the data augmentation may also be implemented as a preprocessing step which is separate of the machine learnable model. As such, any conventional machine learnable model may be trained on the training data to which the data augmentation is applied.

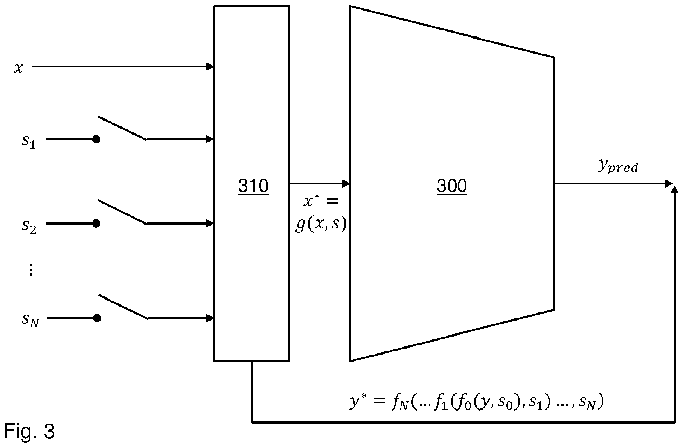

**Fig. 3** illustrates the data augmentation and the corresponding prediction target label generation being implemented by a preprocessing layer 310 which precedes the machine learnable model 300 and which generates the new data instance and the prediction target label iteratively based on a set of conditionally invertible functions. Namely, the processing layer 310 may receive a data instance x of the training data as input, as well as a set of variables {*s*₀, *s*₁,...,*s_{N}*}. The variables may, instead of being different realizations of a same random variable, represent different types of random variables and which may be used to as control parameters or as seeds of different data augmentation techniques *g*₀, *g*₁, ... *g_{N}*, or in different ways directly augment the data instance. The preprocessing layer 310 may then generate new data instance *x** from the data instance *x* by iteratively modifying the data instance x in a manner which is dependent on respective ones of the set of variables, e.g., as *x** = *g_{N}*(.*.*.*g*₁*(g*₀(*x,s*₀),*s*₁) ...,*s_{N}*), and which new data instance *x** may be provided as input to the machine learnable model 300. The processing layer 310 may further generate a prediction target label *y** using a set of conditionally invertible functions {*f*₀,f₁,...*f_{N}*} which are iteratively applied, e.g., as *f_{N}*(...*f*₁(*f*₀(*y,s*₀),*s*₁)...,*s_{N}*), to the class label *y* and respective ones of the set of variables {*s*₀,*s*₁,...,*s_{N}*}, which may be provided as prediction target label to the machine learnable model 300 during training. The different data augmentation techniques *g*₀,*g*₁, ... *g_{N}* may differ in type of data augmentation, e.g., rotation, mirroring, adding noise, etc. By applying several of such data augmentation techniques, the complexity of the overall data augmentation may be increased. The parameter *N* may determine the number of different data augmentation techniques used to generate the new data instance *x**, and thereby this complexity. The parameter *N* may be statically defined, but may in some embodiments also be dynamically modified during training time, for example by gradually and progressively increasing *N* during the training to gradually and progressively increase the complexity of the data augmentation during the training. This may allow splitting the training into several stages in which the types of data augmentations may be added one after another. In a specific example, a first type of rotation may rotate by 0 or 180 degrees, while a second type of rotation may rotate by 0 or 90 degrees. Both types of rotation may be controlled by respective random variables *s*₀,*s*₁ ∈ {0, 1}, which may, in a first stage of training (*N* = 1), yield *s*₀ = 0 denoting 0 degrees and *s*₀ = 1 denoting 180 degrees, and in a second stage of training (*N* = 2), yield (*s*₀, *s*₁) = (0,0) denoting 0 degrees, (*s*₀, *s*₁) = (0,1) denoting 90 degrees, (*s*₀, *s*₁) = (1,0) denoting 180 degrees and (*s*₀, *s*₁) = (1,1) denoting 270 degrees. It will be appreciated that the second stage, or in general each stage, may also represent adding different degrees of noise, mirroring (horizontal, vertical), a type of deformation, etc. Similar examples exist for non-image-based data instances.

In general, the conditionally invertible function *f*, or functions *f*₀ ... *f_{N},* may be either pre-defined, e.g., based on domain knowledge, or as a machine learnable function(s) *f* jointly trained together with the machine learnable model itself. Accordingly, in some embodiments, the conditionally invertible function *f* may be a machine learnable function having the variable s as a condition. The machine learnable function *f* may for example be a neural network which may comprise or be constituted by a set of invertible neural network layers. The machine learnable function *f* may be trained alternatingly with the machine learnable model. For example, starting from an initialization of *f*, the machine learnable model maybe trained on the (augmented) training data. The machine learnable model may then be fixed, and *f* may be trained on validation data. This may be repeated iteratively.

The following discusses the inference using the machine learned model, which may refer to the prediction by machine learned model of a label for an input data instance. The machine learned model may be solely used for inference. However, as also discussed below, the machine learned model may also be used for estimating a prediction (un)certainty of the machine learned model. In general, the inference or prediction may represent a forward pass through the machine learned model, which forward pass may also be performed at training time, e.g., to estimate the prediction (un)certainty at training time.

The type of function *f* and the type of random variable s may be selected before training. At training time, the machine learnable model may receive as input data (*x*, *s*), e.g., *x* being an image and *s* being the random variable. The preprocessing layer of the machine learnable model may then map (*x, s*) to the label *y** = *f*(*y, s*) with respect to a given optimization criterion. Such optimization criterion may be selected from known optimization criteria for supervised classification tasks, such as minimizing the cross-entropy or hinge loss. At the inference time, for an input data instance *x* to be classified, a realization of s may be drawn and an output label *z* may be inferred. Based on the inverse of the conditionally invertible function, i.e., *f*⁻¹(*z,s*), one may infer the most likely label *y* of the input data instance *x*, which may correspond to an inverse translation from label *z* to label *y* ∈ {0,1,..., *C* - 1}. With multiple realizations of *s*, e.g., *s*₀ to *s*_{*L*-1}, which may represent different realizations of a same type of random variable, one may create an ensemble of predictions of *y*, e.g., *y*₀ to *y*_{*L*-1}, which may be used for (un)certainty prediction of the inference by the machine learned model, for example as an alternative to Monte Carlo dropout. More specifically, this may involve deriving multiple new data instances *x*₀,*x*₁, ..., *x*_{*L*-1} from the input data instance *x* by modifying, in a manner which is dependent on the respective variables *s*₀, *s*₁, ...,*s*_{*L*-1}, the data instance *x* to obtain the respective new data instances *x*₀*, x*₁, ...,*x*_{*L*-1}, classifying the multiple new data instances *x*₀, *x*₁, ..., *x*_{*L*-1} using the machine learning model to obtain respective output labels *z*₀, *z*₁, ...,*z*_{*L*-1}, and determining respective class labels *y*₀, y*₁*,..., *y*_{*L*-1} from the set of classes {0,1,..., *C* - 1} for the multiple new data instances *x*₀, *x*₁, ...*, x*_{*L*-1} using an inverse of the conditionally invertible function, e.g., *y* = *f*⁻¹(*z,s*), having as input a respective output label *z*₀, *z*₁, ..., *z*_{*L*-1} and a respective variable *s*₀, *s*₁, ..., *s*_{*L*-1}. A classification uncertainty of a classification by the machine learned mode may then be obtained based on a comparison of the respective class labels *y*₀*, y*₁, ..., *y*_{*L*-1}, for example by calculating a measure of agreement between said labels.

As a very specific example: an input image of a dog may be rotated in various ways and classified by the machine learned model. The class label of the input image may be a label 'dog'. During the training, new class labels may be provided as prediction targets to the machine learnable which may be generated by the conditionally invertible function based on the label 'dog' and the random variable s which determines the rotation, in that each differently rotated input image may be mapped to a separate prediction class. During inference, an input image of a(nother) dog may be again rotated in various ways and each time classified by the machine learned model. The resulting output labels may be mapped back onto the original set of classes using the inverse of the conditionally invertible function. If all classifications yield a same label, e.g., 'dog', this may indicate a high prediction certainty for the dog class, while if there are many disagreements between the class, e.g., many yielding the label 'cat', this may indicate a low prediction certainty for the 'dog' class.

**Fig. 4** shows an example of a system for using a machine learned model to classify data instances by assigning class labels. The system 400 may comprise an input interface 480 for accessing trained model data 196 representing a machine learned model as may be generated by the system 100 of Fig. 1 or the method 200 of Fig. 2 or as described elsewhere. For example, as also illustrated in Fig. 4, the input interface may be constituted by a data storage interface 480 which may access the trained model data 196 from a data storage 490. In general, the input interface 480 and the data storage 490 may be of a same type as described with reference to Fig. 1 for the input interface 180 and the data storage 190. Fig. 4 further shows the data storage 490 comprising input data 422 to be used as input to the machine learned model to obtain output data representing an inference of the machine learned model, such as a class label or a set of class labels and respective probabilities. For example, the input data 422 may be or may comprise sensor data obtained from one or more sensors. In a specific example, the input data 422 may represent an output of a sensor-based observation, e.g., a sensor measurement, of a current state of the system 400 and/or its environment 60, and the machine learned model may provide an inference based on the current state of the system and/or environment, which may in a specific example be an inference relating to a future state of the system and/or environment. In some embodiments, the sensor data as input data 422 may also be received directly from a sensor 20, for example via a sensor interface 420 of via another type of interface instead of being accessed from the data storage 490 via the data storage interface 480.

The system 400 may further comprise a processor subsystem 460 which may be configured to, during operation of the system 400, apply the machine learned model to a data instance of the input data which is to be classified to obtain an output label for the data instance, obtain a variable from a pseudorandom or deterministic process, and determine a class label from the set of classes for the data instance using an inverse of the conditionally invertible function having as input the output label and the variable. The system 400 may further generate output data based on the classification. Such output data may take various forms, and may in some examples directly represent the class label inferred by the system 400. In other examples, which are also described in the following, the system 400 may output data which is derived from, instead of directly representing, the class label.

In general, the processor subsystem 460 may be configured to perform inference, e.g., prediction of labels, using the machine learned model and/or determining a prediction uncertainty in a manner as described elsewhere in this specification.

It will be appreciated that the same considerations and implementation options apply for the processor subsystem 460 as for the processor subsystem 160 of Fig. 1. It will be further appreciated that the same considerations and implementation options may in general apply to the system 400 as for the system 100 of Fig. 1, unless otherwise noted.

Fig. 4 further shows various optional components of the system 400. For example, in some embodiments, the system 400 may comprise a sensor data interface 420 for directly accessing sensor data 422 acquired by a sensor 20 in the environment 60. The sensor 20 may but does not need to be part of the system 400. The sensor 20 may have any suitable form, such as an image sensor, a lidar sensor, a radar sensor, a pressure sensor, a contain temperature sensor, etc. In some embodiments, the sensor data 422 may sensor measurements of different physical quantities in that it may be obtained from two or more different sensors sensing different physical quantities. The sensor data interface 420 may have any suitable form corresponding in type to the type of sensor, including but not limited to a low-level communication interface, e.g., based on I2C or SPI data communication, or a data storage interface of a type as described above for the data storage interface 480.

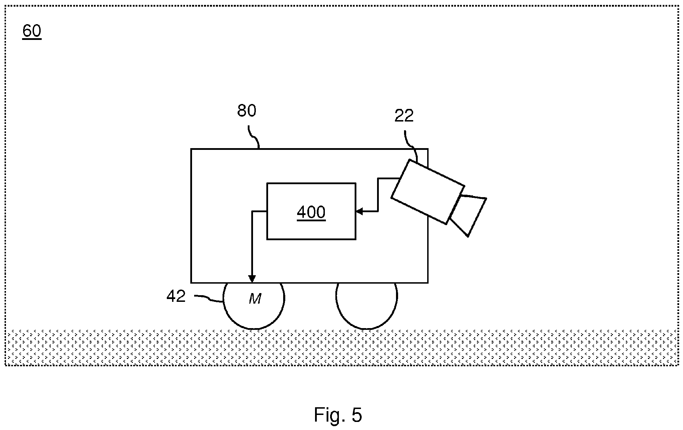

In some embodiments, the system 400 may comprise an actuator interface 440 for providing control data 442 to an actuator 40 in the environment 60. Such control data 442 may be generated by the processor subsystem 460 to control the actuator 40 based on one or more inferences, as may be generated by the system 400 when applying the machine learned model to the input data 422. For example, the actuator 40 may be an electric, hydraulic, pneumatic, thermal, magnetic and/or mechanical actuator. Specific yet non-limiting examples include electrical motors, electroactive polymers, hydraulic cylinders, piezoelectric actuators, pneumatic actuators, servomechanisms, solenoids, etc. Such type of control is described with reference to Fig. 5 for an (semi-)autonomous vehicle.

In other embodiments (not shown in Fig. 4), the system 400 may comprise an output interface to a rendering device, such as a display, a light source, a loudspeaker, a vibration motor, etc., which may be used to generate a sensory perceptible output signal which may be generated based on one or more inferences by the machine learned model. The sensory perceptible output signal may be directly indicative of the inferences by the machine learned model, but may also represent a derived sensory perceptible output signal, e.g., for use in guidance, navigation or other type of control of the physical system.

In general, each system described in this specification, including but not limited to the system 100 of Fig. 1 and the system 400 of Fig. 4, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers. In some embodiments, the system 400 may be part of vehicle, robot or similar physical entity, and/or may be represent a control system configured to control the physical entity.

**Fig. 5** shows an example of the above, in that the system 400 is shown to be a control system of an (semi-)autonomous vehicle 80 operating in an environment 60. The autonomous vehicle 80 may be autonomous in that it may comprise an autonomous driving system or a driving assistant system, with the latter also being referred to as a semiautonomous system. The autonomous vehicle 80 may for example incorporate the system 400 to control the steering and the braking of the autonomous vehicle based on sensor data obtained from a video camera 22 integrated into the vehicle 80. For example, the system 400 may control an electric motor 42 to perform (regenerative) braking in case the autonomous vehicle 80 is expected to collide with a traffic participant. The system 400 may control the steering and/or braking to avoid collision with the traffic participant. For that purpose, the system 400 may infer a current or future state of the vehicle with respect its environment, including the traffic participant, based on the sensor data obtained from the video camera. If the state of the vehicle, e.g., its position relative to the traffic participant, is expected to result in a collision, the system 400 may take corresponding action.

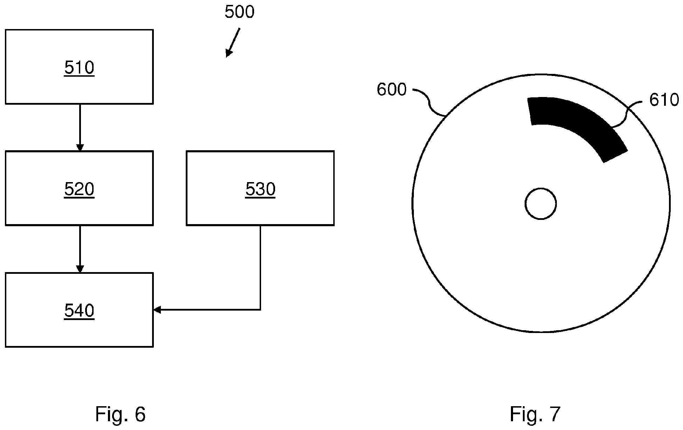

**Fig. 6** shows a computer-implemented method 500 for using a machine learned model to classify data instances by assigning class labels. The method 500 may correspond to an operation of the system 400 of Fig. 4, but may also be performed using or by any other system, apparatus or device. The method 500 is shown to comprise accessing 510 model data representing the machine learned model, wherein the machine learned model is trained on prediction target labels *y** which were generated using a conditionally invertible function *y** = *f*(*y_{d}*,*s*) of pair-wise combinations of class labels *y_{d}* and variables *s*, and wherein the class labels *y_{d}* represent classes from a set of classes {0,1,..., *C* - 1}. The method 500 is further shown to comprise applying 520 the machine learned model to a data instance *x* to be classified to obtain an output label *z* for the data instance, obtaining 530 a variable *s* from a pseudorandom or deterministic process, and determining 540 a class label *y* from the set of classes for the data instance *x* using an inverse of the conditionally invertible function *y* = *f*⁻¹(*z,s*) having as input the output label *z* and the variable *s.*

It will be appreciated that, in general, the operations or steps of the computer-implemented methods 200 and 500 of respectively Figs. 2 and 6 may be performed in any suitable order, e.g., consecutively, simultaneously, or a combination thereof, subject to, where applicable, a particular order being necessitated, e.g., by input/output relations. The order shown in the respective Figs. 2 and 6 is merely exemplary and non-limiting.

Each method, algorithm or pseudo-code described in this specification may be implemented on a computer as a computer implemented method, as dedicated hardware, or as a combination of both. As also illustrated in **Fig. 7**, instructions for the computer, e.g., executable code, may be stored on a computer-readable medium 600, e.g., in the form of a series 610 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, servers, online software, etc. Fig. 7 shows an optical disc 610. In an alternative embodiment of the computer-readable medium 600, the computer-readable medium may comprise model data 610 defining a machine learned model as described elsewhere in this specification.

Examples, embodiments or optional features, whether indicated as non-limiting or not, are not to be understood as limiting the invention as claimed.

In accordance with an abstract of the specification, the following is noted:
A training method is described in which data augmentation is used, in that new data instances are derived from existing data instances (*x*) by modifying the latter in a manner dependent on, e.g., controlled or steered by, respective variables (*s*). A conditionally invertible function (*f*) is provided to generate different prediction target labels (*y**) for the new data instances based on the respective variables (*s*). The machine learnable model thereby may not only learn the class label of a data instance but also the characteristic of the modification. By being trained to learn the characteristics of such modifications, the machine learnable model may better learn the semantic features of a data instance, and thereby may learn to more accurately classify data instances. At inference time, an inverse of the conditionally invertible function (*f*⁻¹) may be used to determine the class label for a test data instance based on the output label (*z*) of the machine learned model.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method (200) for training a machine learnable model using data augmentation of training data, comprising
- accessing (210) training data comprising data instances (*x_{d}*) and class labels (*y_{d}*), wherein the class labels (*y_{d}*) represent classes from a set of classes ({0,1, ..., *C* - 1});
- training (220) the machine learnable model (300) using the training data, wherein the training comprises augmenting the training data by:
- obtaining (230) a variable (*s*) from a pseudorandom or deterministic process;
- deriving (240) a new data instance (*x** = *g*(*x, s*)) from a data instance (*x*) of the training data by modifying, in a manner which is dependent on the variable (*s*), the data instance (*x*) to obtain the new data instance (*x**);
- determining (250) a prediction target label (*y**) for the new data instance (*x**) using a conditionally invertible function (*y** = *f*(*y,s*)) having as input a class label (*y*) of the data instance (*x*) and the variable (*s*);
- using (260) the new data instance (*x**) and the prediction target label (*y**) in the training of the machine learnable model.

2. The method (200) according to claim 1, wherein deriving (240) the new data instance (*x**) from the data instance (*x*) comprises applying a data augmentation technique to the data instance (*x*) and controlling a data augmentation by the data augmentation technique using the variable (*s*).

3. The method (200) according to claim 2, wherein the variable (*s*) is a seed or a control parameter of the data augmentation technique.

4. The method (200) according to any one of claims 1 to 3, wherein the data augmentation technique is provided by a preprocessing layer (310) of or preceding the machine learnable model (300) which receives as input the data instance (*x*) and the variable (*s*) and which provides as output the new data instance (*x**).

5. The method (200) according to claim 1, wherein deriving (240) the new data instance (*x**) from the data instance (*x*) comprises, during the training:
- using the data instance (*x*) as input to the machine learnable model;
- modifying an intermediate output of the machine learnable model as a function of the variable (*s*) to establish the new data instance (*x**) as a modified intermediate output of the machine learnable model; and
- continuing to train the machine learnable model using the modified intermediate output.

6. The method (200) according to claim 5, wherein the machine learnable model (300) is a neural network, and wherein the intermediate output comprises hidden unit outputs of the neural network.

7. The method (200) according to claim 6, wherein modifying the intermediate output comprises concatenating the hidden unit outputs with the variable (s).

8. The method (200) according to any one of claims 1 to 7, further comprising:
- obtaining a set of variables ({*s*₀, *s*₁, ..., *s_{N}*});
- deriving the new data instance (*x**) from the data instance *(x)* by iteratively modifying (*x** = *g_{N}*(...*g*₁(*g*₀(*x*,*s*₀),*s*₁)...,*s_{N}*)) the data instance (*x*) in a manner which is dependent on respective ones of the set of variables; and
- determining the prediction target label (*y**) using a set of conditionally invertible functions ({*f*₀,*f*₁, ...,*f_{N}*}) which are iteratively applied (*f_{N}*(...*f*₁(*f*₀(*y,s*₀),*s*₁)...,*s_{N}*)) to the class label (*y*) and respective ones of the set of variables ({*s*₀, *s*₁, ...,*s_{N}*}).

9. The method (200) according to any one of claims 1 to 8, wherein the conditionally invertible function (*f*) is a machine learnable function having the variable (*s*) as a condition, and wherein the method comprises learning the machine learnable function using the class label (*y*) and the variable (*s*) as input.

10. A computer-implemented method (500) for using a machine learned model to classify data instances by assigning class labels, comprising:
- accessing (510) model data representing the machine learned model, wherein the machine learned model is trained on prediction target labels (*y**) which were generated using a conditionally invertible function (*y** = *f*(*y_{d},s*)) of pair-wise combinations of class labels (*y_{d}*) and variables (*s*), wherein the class labels (*y_{d}*) represent classes from a set of classes ({0,1, ..., *C* - 1});
- applying (520) the machine learned model to a data instance (*x*) to be classified to obtain an output label (*z*) for the data instance;
- obtaining (530) a variable (*s*) from a pseudorandom or deterministic process; and
- determining (540) a class label (*y*) from the set of classes ({0,1,..., *C* - 1}) for the data instance (*x*) using an inverse of the conditionally invertible function (y = *f*⁻¹(*z*,*s*)) having as input the output label (*z*) and the variable (*s*).

11. The computer-implemented method (500) according to claim 11, further comprising:
- drawing multiple variables (*s*₀, *s*₁,..., *s*_{*L*-1}) from the pseudorandom or deterministic process;
- deriving multiple new data instances (*x*₀, *x*₁, ..., *x*_{*L*-1}) from the data instance *(x)* by modifying, in a manner which is dependent on the respective variables (*s*₀,*s*₁, ..., *s*_{*L*-1}), the data instance (*x*) to obtain the respective new data instances (*x*₀,*x*₁, ..., *x*_{*L*-1});
- classifying the multiple new data instances (*x*₀,x₁, ..., *x*_{*L*-1}) using the machine learning model to obtain respective output labels (*z*₀,*z*₁, ..., *z*_{*L*-1});
- determining respective class labels (*y*₀,*y*₁, ...,*y*_{*L*-1}) from the set of classes ({0,1,..., *C* - 1}) for the multiple new data instances (*x*₀, *x*₁, *..., x*_{*L*-1}) using an inverse of the conditionally invertible function (*y* = *f*⁻¹(*z*, *s*)) having as input a respective output label (*z*₀, z₁, ..., *z*_{*L*-1}) and a respective variable (*s*₀, *s*₁, ..., *s*_{*L*-1}); and
- determining a classification uncertainty of a classification by the machine learned model based on a comparison of the respective class labels (*y₀*,*y*₁, ...,*y*_{*L*-1}).

12. A computer-readable medium (600) comprising transitory or non-transitory data (61) representing a computer program, the computer program comprising instructions for causing a processor system to perform the method according to any one of claims 1 to 11.

13. A computer-readable medium (600) comprising transitory or non-transitory data (610) representing a machine learned model, wherein the machine learned model is configured to classify data instances by assigning class labels, wherein the machine learned model is trained on prediction target labels (*y**) which were generated using a conditionally invertible function (*y** = *f*(*y_{d},s*)) of pair-wise combinations of class labels (*y_{d}*) and variables (*s*), wherein the class labels (*y_{d}*) represent classes from a set of classes ({0,1, ..., *C* - 1}), wherein the data (610) further defines the conditionally invertible function or an inverse of the conditionally invertible function for, during use of the machine learned model, determining a class label (*y*) for a data instance (*x*) using the inverse of the conditionally invertible function (*y* = *f*⁻¹(*z, s*)) having as input an output label (*z*) of the machine learned model when applied to the data instance (*x*) and a variable (*s*).

14. A system (100) for training a machine learnable model using data augmentation of training data, comprising:
- an input interface (180) for accessing training data (192) comprising data instances (*x_{d}*) and class labels (*y_{d}*), wherein the class labels (*y_{d}*) represent classes from a set of classes ({0,1, ..., *C* - 1});
- a processor subsystem (160) for training the machine learnable model using the training data, wherein the training comprises augmenting the training data by:
- obtaining a variable (*s*) from a pseudorandom or deterministic process;
- deriving a new data instance (*x** = *g*(*x,s*)) from a data instance (*x*) of the training data by modifying, in a manner which is dependent on the variable (*s*), the data instance (*x*) to obtain the new data instance (*x**);
- determining a prediction target label (*y**) for the new data instance (*x**) using a conditionally invertible function (*y** = *f*(*y,s*)) having as input a class label (*y*) of the data instance (*x*) and the variable (*s*);
- using the new data instance (*x**) and the prediction target label (*y**) in the training of the machine learnable model.

15. A system (400) for using a machine learned model to classify data instances by assigning class labels, comprising:
- an input interface (480) for accessing model data (196) representing the machine learned model, wherein the machine learned model is trained on prediction target labels (*y**) which were generated using a conditionally invertible function (*y** = *f*(*y_{d},s*)) of pair-wise combinations of class labels (*y_{d}*) and variables (*s*), wherein the class labels (*y_{d}*) represent classes from a set of classes ({0,1,..., *C* - 1});
- a processor subsystem (460) configured to:
- apply the machine learned model to a data instance (*x*) to be classified to obtain an output label (*z*) for the data instance;
- obtain a variable (*s*) from a pseudorandom or deterministic process; and
- determining a class label (*y*) from the set of classes ({0,1,..., *C* - 1}) for the data instance (*x*) using an inverse of the conditionally invertible function (*y* = *f*⁻¹(*z,s*)) having as input the output label (*z*) and the variable (*s*).
